# EUROPEAN PATENT APPLICATION

(11) **EP 2 128 107 A2**
(43) Date of publication of application: **02.12.2009**
(21) Application number: 09159128.9
(22) Date of filing: 29.04.2009
(51) Int. Cl.: C04B 7/52, C04B 7/26

(54) **Method for preparation of cement and hydraulic binding agent by electromagnetic milling, as well as the cement, and the hydraulic binding agent produced**

(30) Priority: 29.04.2008 PL 38507508
(71) Applicant: Wapeco Sp. z o.o, 04-088 Warszawa (PL); Vegalo Limited, 1060 Nicosia (CY); Nowak, Wojciech, 42-200 Czestochowa (PL); Kmiotek, Bartlomiej, 42-525 Bledow (PL)
(72) Inventor: Kmiotek, Bartlomiej, 42-525 Bledow (PL)
(74) Representative: Kaminski, Piotr

(57) **Abstract**

The invention is related to a method of preparation of activated cement, **characterized in that** it includes a step, in which burnt cement components selected from a group including clinker, optionally fly ash and optionally other conventional additives, are ground in an electromagnetic mill. A method for preparation of hydraulic binding agent containing activated cement, **characterized in that** it includes a step, in which the starting cement, optionally in a mixture with fly ash, is activated by additional grinding in an electromagnetic mill, is also presented. The invention is also related to the activated cement and a hydraulic binding agent containing it.

## Description

Object of the invention is a method for preparation of a cement and a hydraulic binding agent, the cement and the hydraulic binding agent and a method of enhancement of grade of the cement and an application of the cement.

Conventional methods of cement production include a step of grinding cement components, and in this process usually ball mills are employed. As cement components usually clinker, plaster stone, fly ash and other mineral components are used. Milling the cement components is the most electrical energy-consuming step of all unit operations of cement preparation.

It is known that grinding e.g. of fly ashes improves their binding properties. In Patent PL174628 a method for preparation of a binding agent is disclosed, in which fly ash is ground until specific surface area of 3000 - 3500 sq.cm/g (according to Blaine) is obtained. In examples of embodiment of the invention, however, only ashes of specific surface area 3000 sq.cm/g were obtained.

An electromagnetic mill used in the process of the invention is a high-capacity mill, which can be utilized in the process of preparation of a cement ground from raw cement components and/or including additional grinding of conventional cement in order to enhance its grade, its quality and strength parameters. It was unexpectedly found, that grinding cement in an electromagnetic mill not only causes that the process is very cost-effective but also thanks to grinding cement components or additional grinding of conventional cement in an electromagnetic mill its activation by breaking particles into small ones and additionally through action of electromagnetic waves is attained. The resulting specific surface area of the products upon the processing is even 6500 sq.cm/g. The obtained activated cement or binding agent exhibits enhanced parameters, e.g. strength parameters.

Object of the invention is a method for cement preparation, **characterized in that** it includes a step, in which burnt cement components selected from a group including clinker, optionally fly ash and optionally other conventional additives is ground in an electromagnetic mill.

Preferably, the cement components are subject to grinding during 30-480 seconds.

Preferably, the cement components containing up to 35 weight per cent fly ash are ground.

Object of the invention is also the cement produced by the method defined above.

Object of the invention is also cement **characterized in that** it constitutes cement activated by grinding in an electromagnetic mill, its specific surface area being at least 2800 sq.cm/g.

Preferably, specific surface area of the cement amounts to 2800-7000 sq.cm/g.

Object of the invention is also a method for preparation of a hydraulic binding agent containing cement and optionally fly ash, **characterized in that** it includes a step, in which starting cement, optionally in a mixture with fly ash, is ground in an electromagnetic mill.

Preferably, when the binding agent is a cement, it is subject to grinding during 5-200 seconds.

Preferably, the starting cement of grade CEM I 32.5 is ground to produce an enhanced cement of grade CEM I 42.5.

Preferably, the starting cement of grade CEM I 42.5 is ground to produce an enhanced cement of grade CEM I 52.5.

Preferably, when a mixture of starting cement and fly ash is ground, the fly ash content in the mixture amounts to up to 35%.

Preferably, when a mixture of cement and fly ash is ground, it is subject to grinding during 5-250 seconds.

Object of the invention is also an enhanced hydraulic binding agent produced by the method defined above.

Object of the invention is also an enhanced cement produced by the method defined above.

Object of the invention is also a hydraulic binding agent containing a ground cement or a ground mixture of cement and fly ash, and containing optionally up to 15 per cent conventional additives selected from a group including binding additives, additives to control process of binding, and raw fly ashes, **characterized in that** the cement contained in the binding agent, ground in an electromagnetic mill, has a specific surface area of at least 3400 sq.cm/g, and the ground mixture of cement and ash contained in the binding agent and ground in the electromagnetic mill has a specific surface area of at least 4500 sq.cm/g.

Preferably, specific surface area of the ground cement amounts to 3400-6500 sq.cm/g, and specific surface area of mixture of cement and fly ash amounts to 4500-7500 sq.cm/g.

Preferably, when the binding agent includes a mixture of cement and fly ash, it includes up to 35 weight per cent fly ash.

Object of the invention is also a method of enhancement of grade of the cement by grinding, **characterized in that** the conventional starting cement is ground in an electromagnetic mill during 5-180 seconds to produce cement classified at least one grade higher.

Preferably, the starting cement of grade CEM I 32.5 is ground to produce the enhanced cement of grade CEM I 42.5.

Preferably, the starting cement of grade CEM I 42.5 is ground to produce the enhanced cement of grade CEM I 52.5.

Object of the invention is also an application of the cement ground in an electromagnetic mill or a mixture of the cement ground in an electromagnetic mill and fly ash ground in an electromagnetic mill for preparation of hydraulic binding agents, and the cement used has specific surface area of at least 3400 sq.cm/g, and the mixture of cement and ash used has specific surface area of at least 4500 sq.cm/g.

Preferably, the cement used has specific surface area from 3400 to 6500 sq.cm/g, and the used mixture of cement and ash has specific surface area from 4500 to 7500 sq.cm/g.

The method of grinding of the invention is always carried out in an electromagnetic mill. The electromagnetic mill is much less electric energy-consuming than widely used ball mills. Its unit energy consumption amounts to 2-4 kWh/ton, and output is ca. 40 ton/hour. Moreover, its small overall dimensions, as compared to ball mills, and considerably lower cost of construction make it possible to design a system consisting of several mills, resulting in an increase in an production output to ca. 300 ton/hour and even more. When subjecting portland clinker to grinding and activation in an electromagnetic mill, we obtain cement of high grade.

Using the method of activation grinding of the invention one can produce cements of highly developed specific surface area even amounting to 6500 sq.cm/g and more, that is high-grade cements.

Additional grinding of conventional cement is carried out for a time suitable to obtain enhanced cement, e.g. cement at least of one grade higher. It means that upon grinding the resulting cement will exhibit properties of a cement of a higher grade than those of the starting cement. Grinding of such type is carried out in an electromagnetic mill during 5-180 seconds; preferably during 5-100 seconds.

In the process of additional grinding of the starting cement for 10 seconds at least 5% increase in its specific surface area was attained as compared to its initial area.

The cement activated by the method of the invention, obtained from the raw cement components, can be also subject to additional grinding in an electromagnetic mill during the second step, if its specific surface area is not sufficiently developed, i.e. it amounts to e.g. ca. 2800 sq.cm/g.

The method of the invention has enormous significance for environment, because it makes it possible to manage fly ashes by enhancement of their properties and admixing of the ashes to a mixture of cement or hydraulic binding agent or also by application of raw fly ashes in a mixture with the high-grade activated cement of the invention. The fly ashes used amount to 35 weight per cent.

The process of additional grinding, i.e. re-grinding of cements according to the invention, consists in subjecting conventional cements to mechanical processing i.e. grinding and activation (activation by grinding under defined conditions).

Types and composition of widely-used cements are specified by Polish Standard PN-EN 197-1, according to which we distinguish the following cements:
CEM I
   - portland cement CEM I
CEM II
   - portland slag cement CEM II /A-S, CEM II/B-S
   - portland silica cement CEM II/A-D
   - portland pozzolan cement CEM II/A-P, CEM II/B-P, CEM II/A-Q, CEM II/B-Q
   - portland ash cement CEM II/A-V, CEM II/B-V, CEM II/A-W, CEM II/B-W
   - portland schistose cement CEM II/A-T, CEM II/B-T, CEM II/B-T
   - portland calcareous cement CEM II/A-L, CEM II/B-L, CEM II/A-LL, CEM II/B-LL
   - multicomponent portland cement CEM II/A-M, CEM II/B-M
CEM III
   - blast-furnace cement CEM III/A, CEM III/B, CEM III/C
CEM IV
   - pozzolan cement CEM IV/A, CEM IV/B
CEM IV
   - multicomponent cement CEM V/A, CEM V/B.

Depending on compressive strength [MPa] after 28 days, determined according to the standard PN-EN 196-1, the following three grades of cement strength are distinguished:
- grade 32.5,
- grade 42.5,
- grade 52.5.

Depending on the prior strength of cement, the above-mentioned cement grades are divided into cements of normal prior strength (N) and cements of high prior strength (R).

In the method of the invention a step of additional grinding of the starting cement is carried out, which constitutes either conventional cement e.g. selected from a group including the above-mentioned cements or optionally cement prepared by the method of the invention, that is obtained by grinding of raw cement components in an electromagnetic mill. Cement obtained in the process of activation grinding of raw cement components, depending on their properties and composition, can constitute an activated final product, or an intermediate product, which is subject to further additional grinding in an electromagnetic mill, to obtain a high-grade activated cement or a hydraulic binding agent.

The starting cement is subject to mechanical treatment in an electromagnetic mill, in which it is activated by breaking its grains into smaller ones. The breaking of grains results in a decrease of size of individual fractions of the cement and considerably increases specific surface area of cements.

Accordingly, hydraulic properties of a binding agent are changed. Through increase in a specific surface area of cements we obtain:
- reducing time to start binding,
- increase in heat of hydration,
- increase in dynamics of strength increase.

Moreover, it was found, that through activation of widely-used cements in an electromagnetic mill, the resulting activated cements are characterized by a considerable increase in compression strength [MPa]. This can be explained by an increase in a specific surface area of cement, and also by influence of electromagnetic waves, induced in an electromagnetic mill. Similar enhancement of properties was observed also in case of cement ground from raw cement components.

Preferable activation time of cement is from 5 to 200 seconds. It can also be from 5 to 100 seconds or, preferably, from 5 to 30 seconds.

Activation time of an ash-cement mixture amounts form 5 to 250 seconds. It can also be from 5 to 120 seconds, preferably from 5 to 30 seconds.

The specific surface area of the activated, re-ground cement of the invention can amount from 3400 to 6500 sq.cm/g; it can also amount to 4000-6500 sq.cm/g.

By the method of the invention also a hydraulic binding agent in a form of a mixture of activated fly ash and activated cement is obtained, specific surface area of which amounts to 4500 sq.cm/g-7500 sq.cm/g. Specific surface area can also be preferably 5000-7500 sq.cm/g.

Object of the invention is also the hydraulic binding agent in form of a mixture of activated high-grade cement and raw fly ash originating from coal combustion at the amount up to 35%, and the binding agent of such type optionally includes also up to 15% of other known additives that bind or control process of binding.

Results of testing of specific surface area of activated cements in an electromagnetic mill determined by Blaine method and results of testing compression strength are presented in the following examples:

### Example I

### Preparation of cement activated by grinding raw cement components.

### Raw material batches of the composition:

portland clinker, or
portland clinker (65 weight per cent.) + fly ash (35 weight per cent.)
were placed in an electromagnetic mill and ground during 60 seconds.
Upon activation product specific surface areas were determined by Blaine method and the following results were obtained:

| # | Substance ground | Specific surface area upon grinding [sq.cm/g] |
|---|---|---|
| 1 | Portland clinker | 4712 |
| 2 | Portland clinker (65 weight per cent.) + fly ash (35 weight per cent.), | 5354 |

### Example II

Preparation of cements activated by additional grinding of the starting cement.

### Sample 1

Cement CEM II/B-M(V-LL) 32.5R was subject to activation. Activation was carried out in an electromagnetic mill during 10s, 15s and 30s and the following results were obtained

| # | Time | Specific surface area [sq.cm/g] |
|---|---|---|
| 1 | Starting cement | 4836 |
| 2 | 10s | 5211 |
| 3 | 15s | 5423 |
| 4 | 30s | 6240 |

### Sample 2

Cement CEM I 42.5N was subject to activation. Activation was carried out during 10s, 15s and 30s and the following results were obtained.

| # | Time | Specific surface area [sq.cm/g] |
|---|---|---|
| 1 | Starting cement | 3520 |
| 2 | 10s | 3943 |
| 3 | 15s | 4123 |
| 4 | 30s | 4476 |

### Sample 3

Cement CEM I 42.5R was subject to activation. Activation was carried out during 10s, 15s and 30s and the following results were obtained

| # | Time | Specific surface area [sq.cm/g] |
|---|---|---|
| 1 | Starting cement | 4121 |
| 2 | 10s | 4450 |
| 3 | 15s | 4678 |
| 4 | 30s | 5098 |

### Example III

Mixture of sulfate-calciferous fly ash (35 wt. per cent) with cement CEM I 42.5R (65 wt. per cent) was subject to activation. Activation was carried out during 10s, 15s and 30s and the following results were obtained

| # | Time | Specific surface area [sq.cm/g] |
|---|---|---|
| 1 | Starting mixture | 5153 |
| 2 | 10s | 5426 |
| 3 | 15s | 5652 |
| 4 | 30s | 6413 |

### Example IV

Activation of cements and cement-ash mixtures was carried out during 30 seconds and testing of compression strength [MPa] was performed according to standard PN-EN 196-1.

### Sample 1

Cement CEM II/B-M(V-LL)32.5R was subject to activation, and then mechanical properties of the cement were determined (Compression strength [MPa]).
The following results were obtained:

| Property | | Result of testing |
|---|---|---|
| Compression strength | after 2 days | 26.8 MPa |
| | after 28 days | 53.2 MPa |

### Sample 2

Cement CEM I 42.5N was subject to activation, and then mechanical properties of the cement were determined (Compression strength [MPa]).
The following results were obtained:

| Property | | Result of testing |
|---|---|---|
| Compression strength | After 2 days | 31.5 MPa |
| | After 28 days | 63.5 MPa |

### Sample 3

Cement CEM I 42.5R was subject to activation, and then mechanical properties of the cement were determined (Compression strength [MPa]).
The following results were obtained:

| Property | | Result of testing |
|---|---|---|
| Compression strength | after 2 days | 33.4 MPa |
| | after 28 days | 65.3 MPa |

### Sample 4

Mixture of sulfate-calciferous fly ash (35 wt. per cent) with cement CEM I 42.5R (65 wt. per cent) was subject to activation, and then mechanical properties of the cement were determined (Compression strength [MPa]).
The following results were obtained:

| Property | | Result of testing |
|---|---|---|
| Compression strength | after 2 days | 27.9 MPa |
| | after 28 days | 53.3 MPa |

## Claims

1. Method of cement preparation, **characterised in that** it includes a step, in which burnt cement components selected from a group consisting of clinker, optionally fly ash and optionally other conventional additives, are ground in an electromagnetic mill.

2. Method according to Claim 1, **characterised in that** the cement components are subject to grinding during 30-480 seconds.

3. Method according to Claim 1, **characterised in that** the cement components containing up to 35 weight per cent fly ash are ground.

4. Cement **characterised in that** it constitutes cement activated by grinding in an electromagnetic mill according to the method defined in Claim 1 and its specific surface area amounts from 2800 to 7000 sq.cm/g.

5. Method for preparation of hydraulic binding agent containing cement and optionally fly ash, **characterised in that** it includes a step, in which starting cement, optionally in a mixture with fly ash, is ground in an electromagnetic mill.

6. Method according to Claim 5, **characterised in that** in case when the binding agent constitutes cement, it is subject to grinding during 5-200 seconds and in case when the mixture of cement and fly ash is ground, it is subject to grinding during 5-250 seconds.

7. Method according to Claim 6, **characterised in that** starting cement of grade CEM I 32.5 is ground to produce the enhanced cement of grade CEM I 42.5 or starting cement of grade CEM I 42.5 is ground to produce the enhanced cement of grade CEM I 52.5.

8. Method according to Claim 5, **characterized in that** in case when the mixture of the starting cement and fly ash is ground, the fly ash content in the mixture amounts to 35%.

9. Enhanced hydraulic binding agent, **characterized in that** it was produced by the method defined in Claim 5.

10. Enhanced cement, **characterized in that** it was produced by the method defined in Claim 5.

11. Hydraulic binding agent containing cement or ground mixture of cement and fly ash ground in an electromagnetic mill, and containing optionally up to 15% conventional additives selected from a group consisting of binding additives, additives that control process of binding and raw fly ashes, **characterised in that** specific surface area of the cement contained in the binding agent ground in an electromagnetic mill amounts from 3400 to 6500 sq.cm/g, and specific surface area of the ground mixture of cement and fly ash contained in the binding agent amount from 4500 to 7500 sq.cm/g.

12. Binding agent according to Claim 11, **characterised in that** in case when it includes a mixture of cement and fly ash, it contains up to 35 weight per cent of fly ash.

13. Method of enhancement of grade of cement by grinding, **characterised in that** the conventional starting cement is ground in an electromagnetic mill during 5-180 seconds to produce cement classified at least one grade higher.

14. Method according to Claim 13, **characterised in that** the starting cement of grade CEM I 32.5 is ground to produce the enhanced cement of grade CEM I 42.5 or the starting cement of grade CEM I 42.5 is ground to produce the enhanced cement of grade CEM I 52.5.

15. Application of cement ground in an electromagnetic mill or of a mixture of cement ground in an electromagnetic mill and fly ash ground in an electromagnetic mill for preparation of hydraulic binding agents, the cement used having specific surface area from 3400 to 6500 sq.cm/g, and a mixture of cement and ash used having specific surface area from 4500 to 7500 sq.cm/g.
